## Europäisches Patentamt

## European Patent Office

## Office européen des brevets

(19)

(11) Veröffentlichungsnummer: **0 149 810**
**B1**

(12) **EUROPÄISCHE PATENTSCHRIFT**

(45) Veröffentlichungstag der Patentschrift:
**11.03.87**

(51) Int. Cl.⁴: **B 62 D 33/06**

(21) Anmeldenummer: **84115683.9**

(22) Anmeldetag: **18.12.84**

(54) **Vorrichtung zur Beeinflussung der Federung des Fahrerhauses von Lastkraftwagen.**

(30) Priorität: **21.01.84 DE 3402070**

(43) Veröffentlichungstag der Anmeldung:
**31.07.85 Patentblatt 85/31**

(45) Bekanntmachung des Hinweises auf die Patenterteilung:
**11.03.87 Patentblatt 87/11**

(84) Benannte Vertragsstaaten:
**AT DE FR GB IT NL SE**

(56) Entgegenhaltungen:
**EP - A - 0 093 407**
**DE - A - 1 906 337**
**DE - A - 2 805 548**
**DE - A - 2 929 744**

(73) Patentinhaber: **M A N Nutzfahrzeuge GmbH, Dachauer Strasse 667 Postfach 50 06 20, D-8000 München 50 (DE)**

(72) Erfinder: **Huber, Peter, Buchenstrasse 6b, D-8044 Unterschleissheim (DE)**

ACTORUM AG

## Beschreibung

Die Erfindung bezieht sich auf eine Vorrichtung zur Beeinflussung des Federsystems von Lastkraftwagen zwischen dem Fahrzeugrahmen und dem um eine vordere Sohwenkachse kippbar gegenüber dem Fahrzeugrahmen gelagerten Fahrerhaus der im Oberbegriff des Anspruchs 1 beschriebenen Art (siehe auch DE-A-1906337).

Es ist vielfach üblich, das Fahrerhaus von Lastkraftwagen in Frontlenkerbauweise nach vorne kippbar am Rahmen des Fahrzeuges zu lagern. In der einen Endstellung befindet sich das Fahrerhaus in seiner normalen Betriebsstellung, so dass es den Fahrer aufnehmen kann und dieser das Fahrzeug bedienen kann. Die andere Stellung ist die Wartungsstellung. In ihr ist das Fahrerhaus so gegenüber dem Fahrzeugrahmen gekippt, dass die in der Betriebsstellung des Fahrerhauses unter diesem liegenden Aggregate zur Wartung sowie zum Aus- und Einbau gut zugänglich sind.

Häufig verbreitet ist dabei eine Lösung, bei der das Fahrerhaus um eine Achse schwenkbar ist, die im Bereich des vorderen Endes des Fahrzeuges in dessen Querrichtung liegt. Die Abstützung, die als Fahrerhausfederung vertikale Relativbewegungen zwischen Fahrerhaus und Fahrzeugrahmen zulässt. Im besonderen, aber nicht ausschliesslich, sieht die Erfindung eine Lösung vor, bei der die Schwenkachse eine Welle ist, deren Länge etwa der Breite des Fahrzeugrahmens bzw. des Fahrerhauses entspricht und das Fahrerhaus über eine reibungsarme Wickelfeder mit zugeschalteten Schwingungsdämpfern am Fahrzeugrahmen abgestützt ist.

Sind bei einer gattungsgemässen Lösung voraussetzungsgemäss die horizontalen Abstände einerseits der Federung bzw. Schwenkachse und andererseits des Fahrerhausschwerpunktes in der Betriebsstellung des Fahrerhauses von der vertikalen Fahrzeugquerebene, in der die Schwenkvorrichtung wirkt, so bemessen, dass der eigentlichen Kippbewegung des Fahrerhauses zunächst eine translatorische Vertikalbewegung vorausgeht, so wird während der translatorischen Vertikalbewegung des Fahrerhauses die primär auf Druck beanspruchbare Federung gelängt und es besteht die Gefahr, dass diese «Ausfederbewegung» zu einer Gefährdung der Schwingungsdämpfer führt.

Aufgabe der Erfindung ist es zunächst, diese Gefahr zu vermeiden.

Während der eigentlichen Kippbewegung des Fahrerhauses aus seiner Betriebsstellung heraus verringert sich nun der Abstand zwischen dem Schwerpunkt des Fahrerhauses und der vertikalen Querebene der Wirklinie der Schwenkvorrichtung, bis der Schwerpunkt sogar durch diese Querebene hindurchwandert. Diese Schwerpunktverlagerung hat im letzten Teil zur Folge, dass der Kippbewegung eine vertikale translatorische Bewegung des Fahrerhauses überlagert ist, die der translatorischen Bewegung vor der eigentlichen Kippbewegung entspricht, dieser jedoch entgegengerichtet ist. Diese «Einfederbewegung» kann zu einem Aufschlagen von Fahrerhausteilen auf dem Fahrzeugrahmen und damit zur Beschädigung des Fahrerhauses führen. Zumindest aber wird die häufig unerwartete «Einfederbewegung» während des Kippvorganges zu einer Irritation der Bedienungsperson und damit zu Fehlreaktionen führen.

In der weiteren Ausgestaltung liegt der Erfindung die Aufgabe zugrunde, diese Gefahr zu vermeiden.

Der Lösung der gestellten Aufgabe dienen die mit den Patentansprüchen beanspruchten Merkmale.

Die Erfindung ist nachfolgend anhand der Zeichnung erläutert. In den Zeichnungen zeigen:

Fig. 1 die erfindungsgemäss ausgestaltete vordere Fahrerhauslagerung als Seitenansicht,

Fig. 2 die Anordnung der Fig. 1 als Hälfte der Ansicht in Richtung des Pfeiles A und

Fig. 3 die Anordnung der Fig. 2 als Ansicht in Richtung des Pfeiles B in Fig. 2.

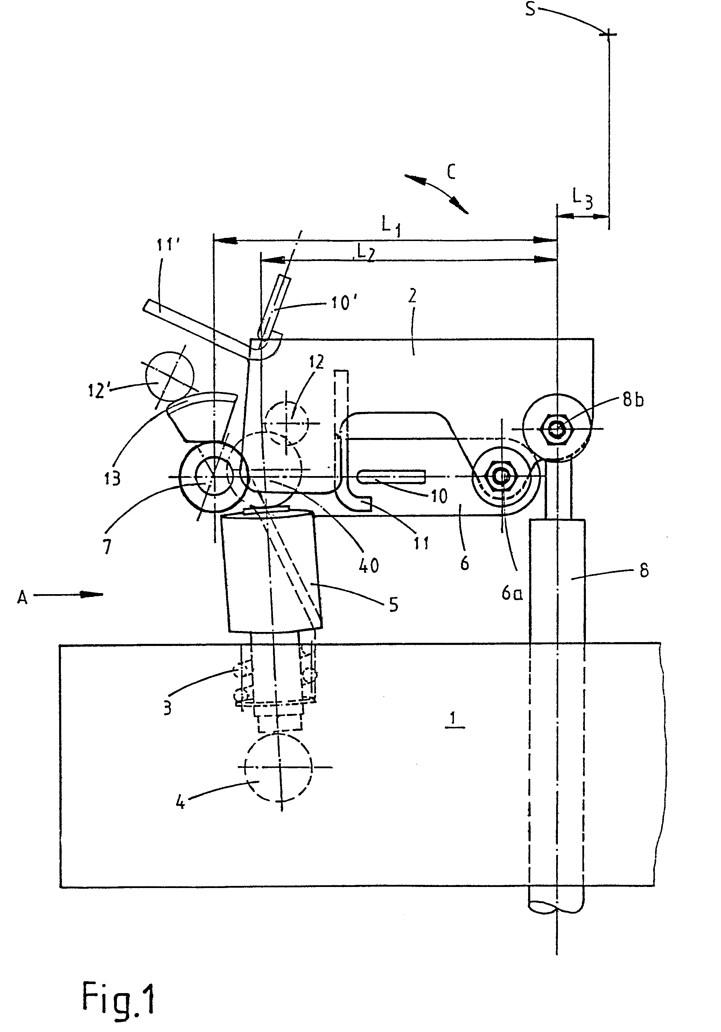

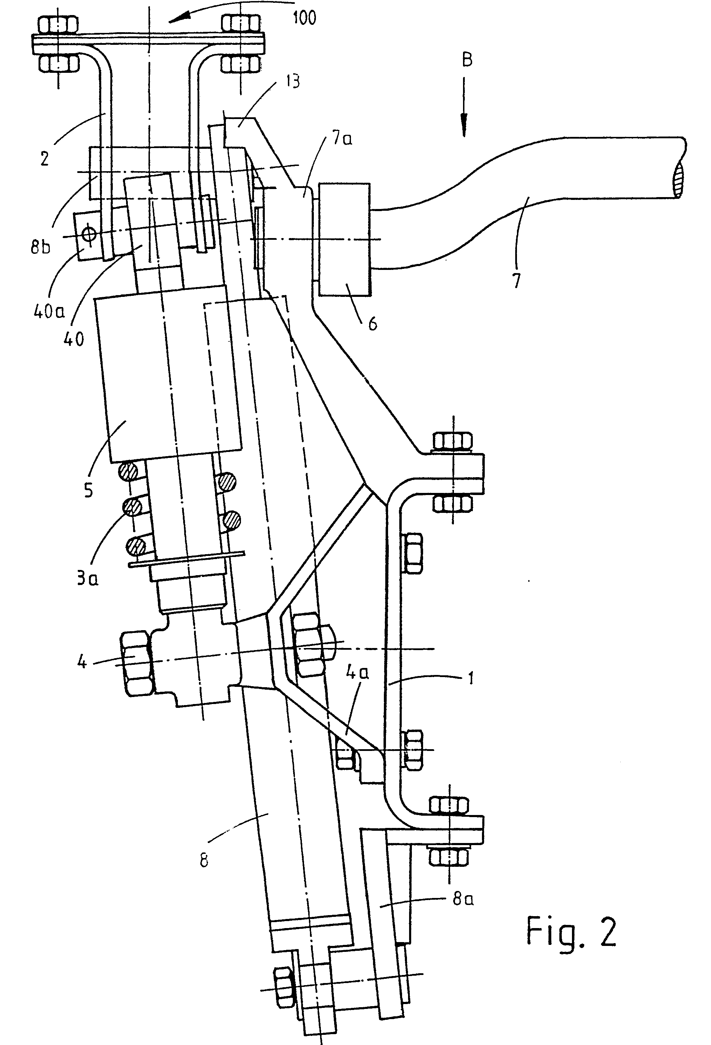

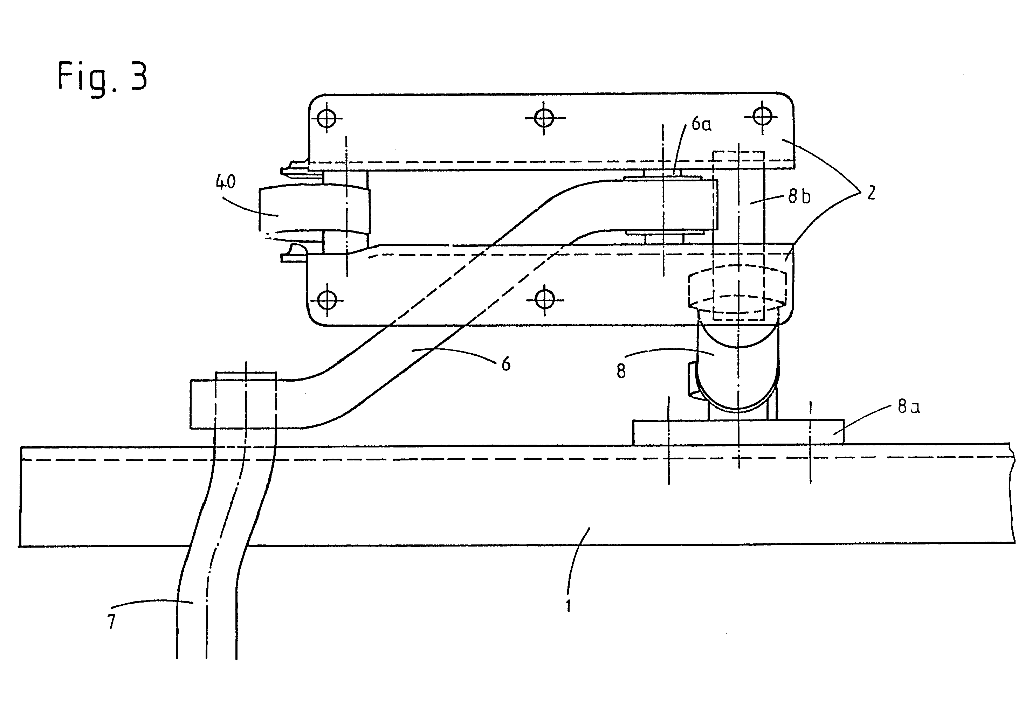

Vom Fahrzeugrahmen ist in Fig. 1 das vordere Ende des rechten von zwei Rahmenlängsträgern dargestellt und mit 1 bezeichnet. In Fig. 2, 3 ist diese rechte der beiden Rahmenlängsträger als Stirnansicht bzw. Draufsicht dargestellt. Vom Fahrerhaus ist in Fig. 1 und 2 jeweils eines von zwei in den Bereichen der Rahmenlängsträger 1 angeordneten tragerförmigen Bauteilen 2 dargestellt, die in für die Erfindung an sich nicht wesentlicher Weise mit dem eigentlichen Fahrerhaus verbunden sind. Eine mögliche Verbindung über Schraubverbindungen ist in Fig. 2 dargestellt, in der das eigentliche Fahrerhaus mit 100 bezeichnet ist. Jedes dieser tragerförmigen Bauteile besteht aus zwei Winkelprofilen, deren vertikale Rücken unter Einhaltung eines Abstandes einander zugekehrt sind und deren Horizontalflansche nach aussen gerichtet und mit dem eigentlichen Fahrerhaus 100 in zweckmässiger Weise verbunden sind. Zwischen jedem dieser Bauteile 2 und dem entsprechenden Rahmenlängsträger 1 ist ein Teil der vorderen Fahrerhausfederung angeordnet. Im Bereich jedes Rahmenlängsträgers 1 ist eine reibungsarme Wickelfeder 3 angeordnet, deren unteres Lager 4 gelenkig an einem Konsol 4a des jeweiligen Rahmenlängsträgers 1 gehalten ist, deren oberes Federlager 40 gelenkig auf einem Bolzen 40a zwischen den Winkelprofilen der jeweiligen trägerförmigen Bauteile 2 gehalten ist und der ein Schwingungsdämpfer 5 zugeordnet ist.

Nahe dem hinteren Ende jedes trägerförmigen Bauteiles 2 ist zwischen den Winkelprofilen auf einem Zapfen 6a ein gekröpfer Längsarm 6 drehbar gelagert, dessen vorderes Ende auf dem einen Ende einer Schwenkachse 7 sitzt, deren Länge etwa dem Abstand zwischen den Rahmenlängsträgern 1 und der Breite des Fahrerhauses entspricht. Sie ist an jedem Ende drehbar in einem Konsol 7a des Fahrzeugrahmens gelagert. Um ihre Längsachse ist das Fahrerhaus zwischen Betriebsstellung und Wartungsstellung in Richtung der Doppelpfeile C in Fig. 1 zu kippen.

Dem Kippen des Fahrerhauses in Richtung des Doppelpfeiles C dient ein hydraulischer Stellzylinder 8, der auf einer Fahrzeugseite an einem der Rahmenlängsträger mittels eines Konsoles 8a und an einem der trägerförmigen Bauteile 2 mittels eines Lagerzapfens 8b gelenkig gelagert ist.

Der Schwerpunkt des Fahrerhauses in dessen Betriebsstellung ist als im Bereich des Punktes S liegend angenommen.

Für die mit der Erfindung behandelte Problematik sind massgebend der Abstand $L_1$ zwischen der Längsachse der Schwenkachse 7 und der Wirklinie des Stellzylinders 8, der Abstand $L_2$ zwischen den Wirklinien der Federn 3 und des Stellzylinders 8 und der Abstand $L_3$ zwischen dem Schwerpunkt S und der Wirklinie des Stellzylinders 8, der jedoch in der Betriebsstellung des Fahrerhauses erheblich grösser ist, als es mit Rücksicht auf die Darstellungsmöglichkeit dargestellt ist. Es ändert sich der Abstand $L_3$ während eines Kippvorganges des Fahrerhauses erheblich, indem der Abstand $L_3$ in der Betriebsstellung des Fahrerhauses am grössten ist, sich beim Schwenken in die Wartungsstellung verringert, um zu «Null» zu werden, wenn der Schwerpunkt durch die vertikale Querebene der Wirklinie des Stellzylinders 8 wandert und dann auf der anderen Seite dieser Ebene nochmals grösser zu werden.

Wenn oben verkürzt von den Abständen $L_1$, $L_2$ und $L_3$ zwischen den Wirklinien und dergleichen gesprochen ist, so handelt es sich tatsächlich um die Abstände zwischen den vertikalen Querebenen, in denen die Wirklinien und dergleichen liegen.

Infolge der Abstände $L_2$ und $L_3$ führt beim Ausfahren des Stellzylinders 8 das Fahrerhaus unter Entspannen der Federn 3 bzw. Ausziehen der Schwingungsdämpfer 5 zunächst eine nach oben gerichtete translatorische Bewegung aus. Erst wenn die maximale Auszuglänge der Federn bzw. Schwingungsdämpfer erreicht ist, beginnt die Schwenkbewegung um die Längsachse der Schwenkachse 7. Für eine derartige Beanspruchung ist das System aus Feder 3 und Schwingungsdämpfer 5 auf jeder Fahrzeugseite nur begrenzt geeignet. Es ist deshalb auf jeder Seite ein Anschlagpaar vorgesehen. Der dem Längsarm 6 zugehörige Anschlag 10 jedes Anschlagpaares ist eine Platte und diese Platte wird von einem bügelförmigen Gegenanschlag 11 der trägerförmigen Bauteile 2, d.h. des Fahrerhauses mit vorgegebenem Spiel umgriffen. Das Spiel ist so bemessen, dass die normalen und gewünschten Federwege zwischen Fahrerhaus und Rahmen nicht beeinträchtigt sind, vor Beginn der Schwenkbewegung des Fahrerhauses aus der Betriebsstellung heraus die Anschläge jedoch bei der translatorischen Bewegung des Fahrerhauses zur Wirkung kommen, ehe die Federn und Schwingungsdämpfer unzulässig gelängt sind. Sind die Anschläge 10 und 11 zur Wirkung gekommen, so geht die translatorische Bewegung des Fahrerhauses in eine Schwenkbewegung über.

Infolge der unterschiedlichen Schwenkbewegungen der Bauteile 2 und des Längsarmes 6 können die Anschläge 10, 11 diesen Bauteilen zugeordnet sein, um ein unzulässiges Längen der Federn 3 zu verhindern. Bei anderen baulichen Gegebenheiten kann der Anschlag 10 auch dem Rahmen 1 zugeordnet sein.

Hat sich nun der Schwerpunkt S des Fahrerhauses der senkrechten Ebene der Wirklinie der Schwenkvorrichtung 8 sehr genähert und bewegt sich schliesslich der Schwerpunkt durch diese Ebene hindurch, so besteht die Tendenz, dass das Fahrerhaus fast schlagartig eine translatorische Bewegung nach unten durchführt, bis die Federn auf Block gehen und das gekippte Fahrerhaus mit Teilen seines Gerippes oder seiner Verkleidung auf Rahmenteilen aufschlagen kann und die Gefahr von Beschädigungen besteht, zumindest aber die Bedienungsperson erschrickt und zu Fehlreaktionen veranlasst wird.

Um dies auszuschalten, ist den trägerartigen Bauteilen 2 je ein Zapfen, vorzugsweise eine Rolle 12, zugeordnet und diese Rollen laufen ab einem vorgegebenen Schwenkweg des Fahrerhauses auf je einer Rollenbahn 13 auf, die so gekrümmt ist, dass die Schwenkbewegung des Fahrerhauses zwanglos möglich, ein Einfedern jedoch ausgeschlossen ist. Sie ist über das Konsol 7a am Rahmenlängsträger 1 befestigt.

In Fig. 1 sind die Anschläge 10, 11 und die Rolle 12 gegenüber der Rollenbahn 13 ausser in der dargestellten Betriebsstellung des Fahrerhauses auch in der Wartungsstellung des Fahrerhauses dargestellt und mit 10', 11' bzw. 12' bezeichnet.

Ohne besondere bauliche Veränderung können an der Stelle der Wickelfedern an sich bekannte Luftfedern zur Anwendung kommen.

## Patentansprüche

1. Vorrichtung zur Beeinflussung des Federsystemes von Lastkraftwagen zwischen dem Fahrzeugrahmen und dem um eine vordere Schwenkachse kippbar gegenüber dem Fahrzeugrahmen gelagerten Fahrerhaus, wobei das Federsystem in der Betriebsstellung des Fahrerhauses auf Druck beanspruchte Federn aufweist, die beim Kippen des Fahrerhauses aus der Betriebs- in die Wartungsstellung entspannt werden, dadurch gekennzeichnet, dass sich die Wirklinien der Federsysteme (3, 5) und die Längsachse der Schwenkachse (7) in vorgegebenen Abständen ($L_1$, $L_2$) vor der Wirklinie der Schwenkvorrichtung (8) des Fahrerhauses, der Schwerpunkt (S) des Fahrerhauses in der Betriebsstellung des Fahrerhauses in einem vorgegebenen Abstand ($L_3$) hinter der Wirklinie der Schwenkvorrichtung liegen und diese Abstände so bemessen sind, dass das Fahrerhaus vor der Schwenkbewegung unter Entspannung der Feder (3) zunächst eine etwa vertikale translatorische Bewegung ausführt, bis am Ende der zugelassenen translatorischen Bewegung ein Anschlag (11) des Fahrerhauses an einem Gegenanschlag (10) zur Wirkung kommt und von diesem Betriebszustand unter dem Einfluss der weiter wirkenden Schwenkvorrichtung das Fahrerhaus um die Schwenkachse geschwenkt wird.

2. Vorrichtung nach Anspruch 1, dadurch gekennzeichnet, dass jeder Feder (3) des Federsystemes ein Anschlagpaar (10, 11) zugeordnet ist.

3. Vorrichtung nach Anspruch 1 oder 2, dadurch gekennzeichnet, dass jedes Anschlagpaar (10, 11) ein funktionell dem Fahrzeugrahmen zugeordnete Platte (10) aufweist und einen die Platte bügelförmig mit Spiel umgreifenden Bügel (11) des Fahrerhauses.

4. Vorrichtung nach Anspruch 3, dadurch gekennzeichnet, dass der funktionell dem Rahmen zugeordnete Anschlag (10) einem Bauteil (6) zugeordnet ist, das ebenfalls gegenüber dem Rahmen geschwenkt wird, das mit seiner Schwenkbewegung aber hinter der Schwenkbewegung des Fahrerhauses zurückbleibt.

5. Vorrichtung nach einem der Ansprüche 1 bis 4, dadurch gekennzeichnet, dass die fahrerhausseitigen Anschlüsse (40) für das Federsystem (3, 5) und die Schwenkvorrichtung (8), sowie die dem Fahrerhaus zugehörigen Anschläge (11) an einem dem Fahrerhaus zugeordneten trägerförmigen Bauteil (2) angeordnet sind.

6. Vorrichtung nach einem der Ansprüche 1 bis 5, dadurch gekennzeichnet, dass das Federsystem (3, 5) Federn (3) mit geringer innerer Reibung aufweist, die über Schwingungsdämpfer (5) am Fahrerhaus bzw. dem Fahrerhaus zugeordneten trägerförmigen Bauteil (2) angelenkt sind.

7. Vorrichtung nach Anspruch 6, dadurch gekennzeichnet, dass die Federn reibungsarme Wikkelfedern (3) sind.

8. Vorrichtung nach einem der Ansprüche 1 bis 7, bei der der Abstand ($L_3$) zwischen dem Schwerpunkt (S) des Fahrerhauses und der vertikalen Querebene der Wirklinie der Schwenkvorrichtung (8) während des Schwenkens des Fahrerhauses stark verkleinert wird, der Schwerpunkt gegebenenfalls sogar über die senkrechte Querebene der Wirkungslinie der Schwenkvorrichtung hinauswandert, dadurch gekennzeichnet, dass ein Einfedern des Fahrerhauses während dessen Schwenkbewegung zwangsweise verhindert ist.

9. Vorrichtung nach Anspruch 8, dadurch gekennzeichnet, dass das Einfedern des Fahrerhauses wahrend seiner Schwenkbewegung durch einen am Fahrerhaus befestigten Zapfen (12) verhindert ist, der auf einer Abstützkurve (13) des Fahrzeugrahmens (1) aufläuft.

10. Vorrichtung nach Anspruch 9, dadurch gekennzeichnet, dass der Zapfen eine Rolle (12) ist.

11. Vorrichtung nach einem der Ansprüche 9 oder 10, dadurch gekennzeichnet, dass jeder Feder (3) der Federung eine eigene Vorrichtung (12, 13) zum Verhindern des Einfederns zugeordnet ist.

12. Vorrichtung nach einem der Ansprüche 1 bis 11, dadurch gekennzeichnet, dass das Federsystem Luftfedern aufweist.

## Claims

1. A device for acting on the springing of lorries between the vehicle frame and the driving cab, the same being so mounted as to be tiltable relatively to such frame around a front pivot axis, the springing having springs which are in compression with the cab in its operative position and which are relieved of stress when the cab is tilted from its operative position into its position for servicing and inspection or the like, characterised in that the lines of action of the springings (3, 5) and the longitudinal axis of the pivot axis (7) are disposed at predetermined distances ($L_1$, $L_2$) before the line of action of the pivoting device (8) of the cab and the centre (S) of gravity of the cab when the same is in its operative position is at a predetermined distance ($L_3$) behind the line of action of the pivoting device (8) and the distances are so dimensioned that the cab initially performs, before the pivoting movement and with destressing of the spring (3), a substantially vertical translational movement until at the end of the permissible translational movement an abutment (11) of the cab co-operates operatively with a companion abutment (10) and, through the agency of the pivoting device (8) which continues to act, the cab is pivoted around the pivot axis from this operative state.

2. A device according to claim 1, characterised in that an abutment pair (10, 11) is associated with each spring (3) of the springing.

3. A device according to claim 1 or 2, characterised in that abutment pair (10, 11) has: a plate (10) operatively associated with the vehicle frame; and a stirrup (11) of the cab, the stirrup engaging stirrup-fashion and with clearance around the place (10).

4. A device according to claim 3, characterised in that the abutment (10) operatively associated with the frame is associated with a component (6) which also pivots relatively to the frame but lags in its pivoting movement on the pivoting movement of the cab.

5. A device according to any of claims 1 - 4, characterised in that the cab-side connections (40) for the springing (3, 5) and the pivoting device (8), and the abutments (11) associated with the cab, are disposed on a bearer-like or girder-like component (2) associated with the cab.

6. A device according to any of claims 1 - 5, characterised in that the springing (3, 5) has springs (3) which have reduced internal friction and which are pivotally connected by way of vibration dampers (5) to the cab or to the bearer-like component (2) associated therewith.

7. A device according to claim 6, characterised in that the springs are low-friction coil springs (3).

8. A device according to any of claims 1 - 7 in which the distance ($L_3$) between the centre (S) of gravity of the cab and the vertical transverse plane of the line of action of the pivoting device (8) decreases considerably during the pivoting of the cab, the centre of gravity possibly even moving beyond the vertical transverse plane of the line of action of the pivoting device, characterised in that an inwards stroke of the cab is prevented automatically during its pivoting.

9. A device according to claim 8, characterised in that the stroke or inwards movement of the cab is prevented during the pivoting thereof by a journal (12) which is secured to the cab and which runs on a cam (13) of the frame (1).

10. A device according to claim 9, characterised in that the journal is a roller (12).

11. A device according to claim 9 and/or 10, characterised in that independent means (12, 13) for preventing an inwards movement of the cab are associated with each spring (3) of the springing.

12. A device according to any of claims 1 - 11, characterised in that the springing has air springs.

## Revendications

1. Dispositif pour influencer le système de suspension de véhicules utilitaires, entre le châssis du véhicule et la cabine du conducteur, montée de façon à pouvoir basculer par rapport au châssis du véhicule autour d'un axe de basculement antérieur, le système de suspension comportant, dans la position d'exploitation de la cabine du conducteur, des ressorts sollicités en pression qui, lors du basculement de la cabine du conducteur, à partir de la position d'exploitation dans la position d'entretien, sont détendus, dispositif caractérisé en ce que les lignes d'action du système de suspension (3, 5) et l'axe longitudinal de l'axe de basculement (7) se situent à des distances prédéfinies ($L_1$, $L_2$) en avant de la ligne d'action du dispositif de basculement (8) de la cabine du conducteur, le centre de gravité (S) de la cabine du conducteur, dans la position d'exploitation de cette cabine du conducteur, étant à une distance prédéfinie ($L_3$) derrière la ligne d'action du dispositif de basculement, et ces distances étant telles que la cabine du conducteur, avant le mouvement de basculement, accomplit, du fait de la détente du ressort (3), tout d'abord un déplacement à peu près vertical de translation jusqu'à ce que, à la fin du déplacement de translation autorisé, une butée (11) de la cabine du conducteur devienne opérante contre une butée (10), tandis qu'à partir de cet état de fonctionnement, et sous l'influence du dispositif de basculement poursuivant son action, la cabine du conducteur est basculée autour de l'axe de basculement.

2. Dispositif selon la revendication 1, caractérisé en ce qu'une paire de butées (10, 11) est associée à chacun des ressorts (3) du système de suspension.

3. Dispositif selon la revendication 1 ou 2, caractérisé en ce que chaque paire de butées (10, 11) comporte une plaque (10) associée fonctionnellement au châssis du véhicule et un étrier (11) de la cabine du conducteur entourant avec du jeu cette plaque.

4. Dispositif selon la revendication 3, caractérisé en ce qu'une pièce constitutive (6) est associée à la butée (10) associée fonctionnellement au châssis, cette pièce constitutive étant également basculée par rapport au châssis, son déplacement de basculement étant toutefois décalé en arrière par rapport au mouvement de basculement de la cabine du conducteur.

5. Dispositif selon une des revendications 1 à 4, caractérisé en ce que les raccordements (40) côté cabine du conducteur pour le système de suspension (3, 5) et le dispositif de basculement (8), ainsi que les butées (11) faisant partie de la cabine du conducteur, sont disposés sur une pièce constitutive (2) en forme de support associée à la cabine du conducteur.

6. Dispositif selon une des revendications 1 à 5, caractérisé en ce que le système de suspension (3, 5) comporte des ressorts (3) avec un frottement interne réduit qui, par l'intermédiaire d'amortisseurs de vibrations (5), sont articulés sur la cabine du conducteur ou bien la pièce constitutive (2) associée à la cabine du conducteur.

7. Dispositif selon la revendication 6, caractérisé en ce que les ressorts (3) sont des ressorts à boudin à frottement réduit.

8. Dispositif selon une des revendications 1 à 7, dans lequel la distance ($L_3$) entre le centre de gravité (S) de la cabine du conducteur et le plan transversal vertical de la ligne d'action du dispositif de basculement (8) est fortement réduite par le basculement de la cabine du conducteur, le centre de gravité se déplaçant même éventuellement au-delà du plan transversal vertical de la ligne d'action du dispositif de basculement, dispositif caractérisé en ce qu'une compression des ressorts par la cabine du conducteur est impérativement empêchée pendant ce mouvement de basculement.

9. Dispositif selon la revendication 8, caractérisé en ce que la compression des ressorts par la cabine du conducteur pendant son mouvement de basculement est empêchée par un tenon (12) fixé sur la cabine du conducteur et qui se déplace sur une courbe d'appui (13) du châssis (1) du véhicule.

10. Dispositif selon la revendication 9, caractérisé en ce que le tenon est un galet (12).

11. Dispositif selon une des revendications 9 ou 10, caractérisé en ce qu'à chacun des ressorts (3) de la suspension est associé un dispositif (12, 13) qui lui est propre pour empêcher la compression du ressort.

12. Dispositif selon une des revendications 1 à 11, caractérisé en ce que le système de suspension comporte des ressorts pneumatiques.

Fig.1

Fig. 2

Fig. 3

0 149 810